**Europäisches Patentamt**

**European Patent Office**

**Office européen des brevets**

(19)

(11) Veröffentlichungsnummer: **0 009 143
B1**

(12) # EUROPÄISCHE PATENTSCHRIFT

(45) Veröffentlichungstag der Patentschrift:
23.06.82

(51) Int. Cl.³: **H 04 Q 11/04, H 04 J 3/06**

(21) Anmeldenummer: **79103167.7**

(22) Anmeldetag: **27.08.79**

(54) **Schaltungsanordnung zum Empfang von digitalen Nachrichtensignalen in einer digitalen Vermittlungsstelle eines PCM-Zeitmultiplexfernmeldenetzes.**

(30) Priorität: **20.09.78 DE 2840952**

(43) Veröffentlichungstag der Anmeldung:
**02.04.80 Patentblatt 80/7**

(45) Bekanntmachung des Hinweises auf die Patenterteilung:
**23.06.82 Patentblatt 82/25**

(84) Benannte Vertragsstaaten:
**AT CH FR GB IT NL SE**

(56) Entgegenhaltungen:
**DE-A-1 574 492
DE-A-2 516 192
DE-A-2 619 333**

(73) Patentinhaber: **SIEMENS AKTIENGESELLSCHAFT
Berlin und München, Postfach 22 02 61,
D-8000 München 22 (DE)**

(72) Erfinder: **Zemanek, Josef, Dipl.-Ing.,
Aidenbachstrasse 144a, D-8000 München 71 (DE)**

Schaltungsanordnung zum Empfang von digitalen Nachrichtensignalen in einer digitalen Vermittlungsstelle eines PCM-Zeitmultiplexfernmeldenetzes

Die Erfindung betrifft eine Schaltungsanordnung zum Empfang von digitalen Nachrichtensignalen in einer digitalen Vermittlungsstelle eines PCM-Zeitmultiplexfernmeldenetzes, die in Form von wenigstens ein Nachrichtensignalwort, gegebenenfalls ein Signalisierwort, sowie ein diesen vorangestelltes Synchronisierwort umfassenden Nachrichtensignalblöcken von digitalen Teilnehmerstellen aus auf Teilnehmeranschlußleitungen übertragen werden, mit Registern für die Teile eines Nachrichtensignalblokkes, sowie mit einem Vergleicher, der den Inhalt des für die Aufnahme des Synchronisierwortes bestimmten Registers auf das Auftreten eines Synchronisierwortes überwacht und dabei im Falle einer Übereinstimmung eine Synchronbetriebsphase herbeiführt oder aufrechterhält und im Falle einer Nichtübereinstimmung eine Synchronisierphase herbeiführt oder aufrechterhält.

Wegen der unterschiedlichen Laufzeiten auf den einzelnen Teilnehmeranschlußleitungen, die auch unterschiedlichen Schwankungen unterworfen sein können, ist der Empfangszeitpunkt in der Vermittlungsstelle nicht exakt festlegbar. Die Schaltungsanordnung zum Empfang der Nachrichtensignalblöcke in der Vermittlungsstelle muß also innerhalb einer bestimmten Empfangszeitspanne zu jeder Zeit solche Nachrichtensignalblöcke phasenrichtig aufnehmen können. Bei einer bekannten Schaltungsanordnung der eingangs genannten Art (DE-A-2 619 333) ist bei normalen Übertragungsbedingungen, also bei einer Codedarstellung, bei der der Spannungswert, durch den Binärwerte der einen Art dargestellt werden, nicht von den in Übertragungspausen herrschenden Spannungsverhältnissen unterscheidbar ist, nicht auszuschließen, daß Teile der Nachrichtensignalwörter, die dasselbe Bitmuster wie ein Synchronisierwort aufweisen, zumindest sofern sie über längere Zeitspannen wiederholt auftreten, zu Fehlsynchronisierungen führen.

Sofern eine Codedarstellung der digitalen Nachrichtensignale vorliegt, die es gestattet, beide Arten von Binärwerten eindeutig von Pausen zu unterscheiden, läßt sich aus empfangenen Nachrichtensignalblöcken ein Empfangssteuersignal ableiten, das deren zeitliche Lage und Länge charakterisiert, so daß sich mit einer vorgeschlagenen Schaltungsanordnung (DE-A-2 832 589) solche Fehlsynchronisierungen vermeiden lassen.

Da die genannten Voraussetzungen jedoch nicht immer gegeben sind bzw. die Schaffung derselben einen zusätzlichen Aufwand darstellt, ist es Aufgabe der vorliegenden Erfindung, eine Schaltungsanordnung anzugeben, die, auch dann wenn sich die Phasenlage und -länge der Nachrichtensignalblöcke nicht auf die vorgenannte Art und Weise bestimmen läßt, solche Fehlsynchronisierungen ausschließt und darüber hinaus gewährleistet, daß Störsignale, die innerhalb der Empfangszeitspanne aber zeitlich versetzt zu den Nachrichtensignalblöcken auftreten, nicht zur Auswertung gelangen.

Erfindungsgemäß wird diese Aufgabe bei einer Schaltungsanordnung der eingangs erwähnten Art dadurch gelöst, daß diese Schaltungsanordnung eine Signalauswerteeinrichtung, die auf vom Ruhezustand unterscheidbare digitale Signale anspricht und danach mindestens für die Dauer eines Nachrichtensignalblokkes und höchstens bis zum Beginn einer neuen Nachrichtensignalblockperiode für solche digitalen Signale unempfindlich ist, ferner eine Taktauswahlschaltung, die aus dem Amtstakt der Vermittlungsstelle mehrere gleichfrequente aber phasenverschobene Bittaktfolgen ableitet und während einer Synchronisierphase nur die mit dem Ansprechzeitpunkt der Auswerteeinrichtung gleichphasige Bittaktfolge weitergibt, ferner einen Synchronzähler mit der Länge der Nachrichtensignalblöcke entsprechender Zählkapazität, der durch die ausgewählte Bittaktfolge weitergeschaltet und während der Synchronisierphase beim Ansprechen der Signalausworteschaltung in seinen Zähleranfangsstand gestellt sind sowie eine Ablaufsteuerung aufweist, die aus den Zählerständen des Synchronzählers Aufnahmefreigabesignale für die Register ableitet, und daß in der Synchronbetriebsphase die durch die Taktauswahlschaltung ausgewählte Bittaktfolge unbeeinflußt beibehalten wird, eine Nullstellung des Synchronzählers unterbleibt sowie die Ausgabe aus den Registern für das Signalisierwort und das Nachrichtensignalwort freigegeben wird.

Weitere Ausgestaltungen der Erfindung betreffen die Betriebsverhältnisse bei einer festgelegten Empfangszeitspanne sowie zweckmäßige Realisierungen einzelner Bestandteile der erfindungsgemäßen Schaltungsanordnung.

Nachstehend wird die Erfindung anhand eines Ausführungsbeispiels unter Bezugnahme auf zwei Figuren näher erläutert.

Von den Figuren zeigen:

Figur 1 ein Ausführungsbeispiel der erfindungsgemäßen Schaltungsanordnung.

Figur 2 ein Zeitdiagramm der Signalverläufe an bestimmten Punkten der Schaltungsanordnung gemäß Figur 1.

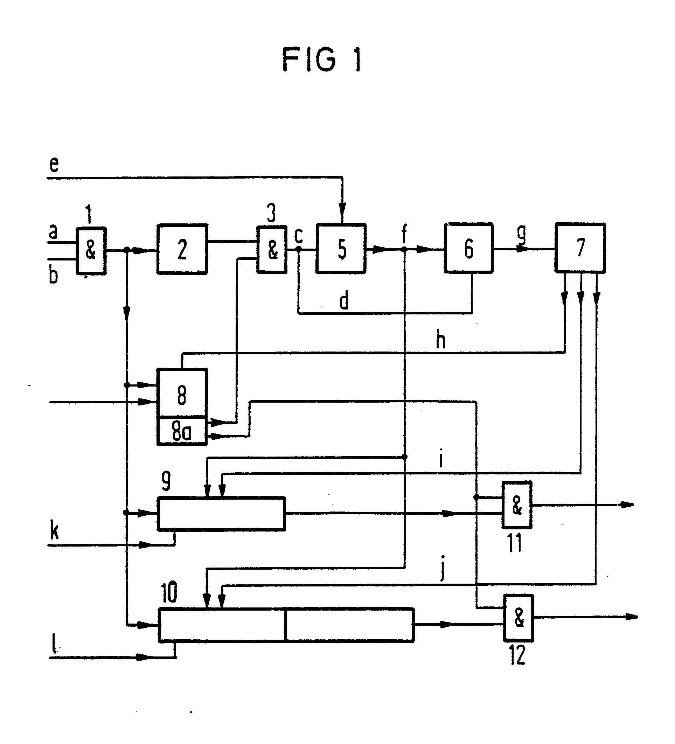

Die in Figur 1 dargestellte Schaltungsanordnung ist für den Fall konzipiert, daß eine definierte Empfangszeitspanne vorhanden ist, außerhalb deren ein Empfang von Nachrichtensignalblöcken nicht möglich ist. Das ist dann der Fall, wenn nach dem sogenannten Zeitlagengetrenntverfahren gearbeitet wird, also auf der Teilnehmeranschlußleitung zeitlich nacheinander Sendebetrieb und Empfangsbetrieb herrscht, wobei zwischen beiden Betriebsarten eine Pause eingehalten ist, um den Empfang von Echosignalen zu verhindern.

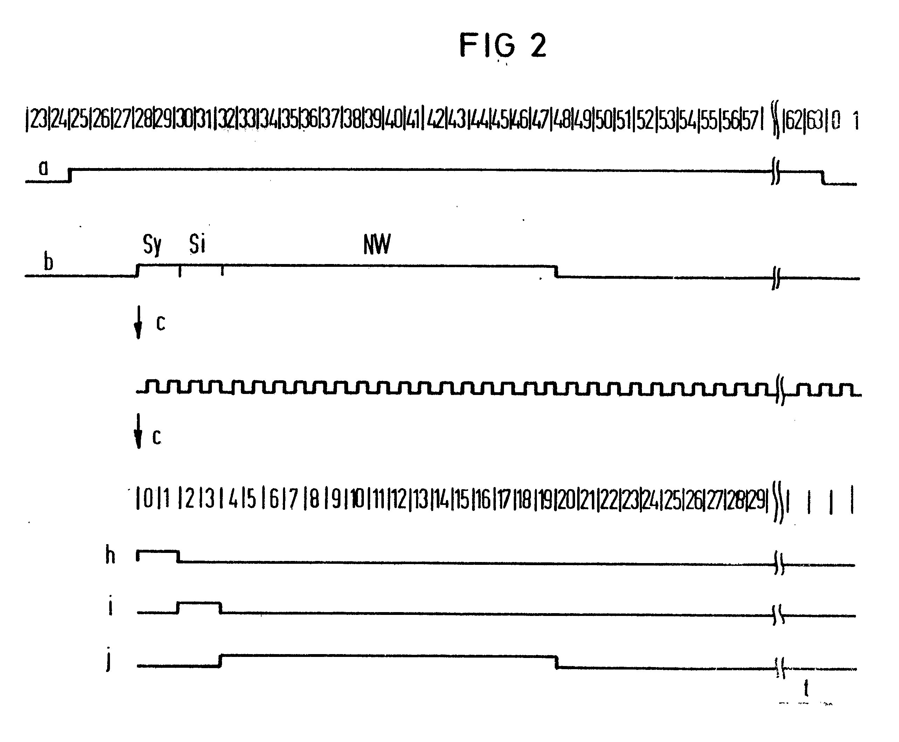

Aus diesem Grund wird mit Hilfe eines Koinzidenzgliedes 1 ein Signal a, siehe Zeile 2 in Figur 2, das die Länge einer solchen Empfangszeitspanne angibt, mit den ankommenden Nachrichtensignalen b verknüpft. Diese Nachrichtensignale sind, wie Zeile 3 in Fig. 2 zeigt, zusammengesetzt aus einem vorangestellten Synchronisierwort Sy, einem Signalisierwort Si sowie aus den eigentlichen Nachrichtensignalen, bei denen es sich um pulscodemodulierte Fernmeldeinformationen oder aber um andere digital dargestellte Datensignale handeln kann. Aufgrund dieser Verknüpfung können Nachrichtensignalblöcke lediglich während der Empfangszeitspanne an eine Signalauswerteeinrichtung 2 der Schaltungsanordnung gemäß Figur 1 gelangen. Diese Signalauswerteeinrichtung ist so geartet, daß sie auf vom Ruhezustand unterscheidbare digitale Signale anspricht, nach erstmaligem Ansprechen aber bis zum Beginn einer neuen Nachrichtensignalblockperiode für solche digitalen Signale unempfindlich ist. Da vereinbarungsgemäß das einem Nachrichtensignalblock voranstehend gesendete Synchronisierwort Sy mit einem Bit vom Binärwert 1 beginnt, ist die Signalauswerteeinrichtung so ausgelegt, daß sie auf solche 1-Bits und damit, abgesehen vom Fall fehlerhafterweise vor Blockbeginnbit auftretender Störbits jeweils auf das erste Bit eines Nachrichtensignalblockes anspricht. Schaltungstechnisch kann eine solche Einrichtung in Form einer bistabilen Kippstufe realisiert sein, die mit Auftreten des den Beginn der Empfangszeitspanne charakterisierenden Signals a, siehe Figur 2, gesetzt und durch das erste danach auftretende 1-Bit wieder rückgesetzt wird.

Das beim Ansprechen der Signalauswerteeinrichtung auftretende Ausgangssignal wird einem Koinzidenzglied 3 als Eingangssignal zugeführt, an dessen anderem Eingang während einer Synchronisierphase ein zur Erfüllung der Verknüpfungsbedingung erforderliches Signal anliegt.

Dementsprechend wird in der Synchronisierphase durch das Ausgangssignal c, siehe entsprechende Zeile in Figur 2, eine Taktauswahlschaltung 5 angesteuert. Diese Taktauswahlschaltung erzeugt aus dem Vermittlungstakt e, der beispielsweise eine Frequenz von 2,048 MHz aufweisen soll, eine Reihe von gleichfrequenten Bittakten von jeweils beispielsweise 256 kHz, die jedoch gegeneinander phasenversetzt sind. Durch die Ansteuerung mit dem Ausgangssignal c wird dabei zum Zeitpunkt des Ansprechens der Signalauswerteeinrichtung 2 diejenige Taktfolge ausgewählt und als Taktfolge f ausgegeben, die mit deren Ausgangssignal phasengleich ist.

Mit der ausgewählten Taktfolge f wird ein Synchronzähler weitergeschaltet, dessen Zählkapazität der Länge eines Nachrichtensignalblockes entspricht. Während der erwähnten Synchronisierphase ist dieser Synchronzähler in seinen Zähleranfangsstand gestellt, also auf die erste Signalflanke innerhalb der Empfangszeitspanne aufsynchronisiert worden, wozu ihm das Ausgangssignal d des Koinzidenzgliedes 3 zugeführt worden ist.

Die während der einzelnen Zählerstände des Synchronzählers 6 abgegebenen Ausgangssignale g werden einer Ablaufsteuerung 7 zugeführt, die daraus Aufnahmefreigabesignale für Register 8, 9 und 10 ableitet.

Bei dieser Ablaufsteuerung handelt es sich um einen Decoder, der an den erwähnten Teilen der Nachrichtensignalblöcke, also dem Synchronisierwort Sy, dem Signalisierwort Si und dem Nachrichtensignalwort NW, entsprechenden Ausgängen jeweils solange ein Ausgangssignal h, i oder j abgibt, wie der Synchronzähler die diesen Teilen entsprechende Zählerstände einnimmt.

Von den erwähnten Registern dient das Register 8 der Aufnahme des Synchronisierwortes, das Register 9 der Aufnahme des Signalisierwortes und das Register 10 der Aufnahme von Nachrichtensignalwörtern. Das Register 9 hat beispielsweise 8 Registerstufen, obwohl das Signalisierwort in einem Nachrichtensignalblock lediglich 2 Bit umfaßt, da durch Überrahmenbildung 8 Bit umfassende Signalisierwörter gebildet werden. Zur Kennzeichnung eines Überrahmens dienen hierbei verschiedene Bitkombinationen des Synchronisierwortes, das jeweils einmal die Bitkombination 10 und dreimal die Bitkombination 11 aufweist. Das Register 10 kann beispielsweise 16 Registerstufen aufweisen, wenn ein Nachrichtensignalblock 2 PCM-Wörter von jeweils 8 Bit umfassen soll.

Wenn also innerhalb einer Empfangszeitspanne während einer Synchronisierphase ein richtiger Nachrichtensignalblock ankommt, wird dessen erstes Bit durch die Signalauswerteeinrichtung 2 erkannt, daraufhin durch die Taktauswahlschaltung 5 ein phasengleicher Takt ausgewählt und der Synchronzähler auf Null gestellt. Die Ablaufsteuerung gibt dann an das Register 8 ein Aufnahmefreigabesignal ab, so daß das Synchronwort in dieses Register einlaufen kann. Ihm ist ein Vergleicher 8a zugeordnet, mit dessen Hilfe der Inhalt des Registers 8 daraufhin überwacht wird, ob ein richtiges Synchronwort enthalten ist. Es wird dabei berücksichtigt, daß ein solches richtiges Synchronwort sowohl in der Codekombination 10 als auch in der Codekombination 11 auftreten kann. Das Weiterzählen des Synchronzählers 6 bewirkt über die Ablaufsteuerung 7, daß das nachfolgende Signalisierwort Si und das Nachrichtensignalwort NW in das Register 9 bzw. das Register 10 gelangen können.

Hat der durch den Vergleicher 8a durchgeführte Vergleich eine Nichtübereinstimmung ergeben, dann wird an dessen mit dem einen Eingang des erwähnten Koinzidenzgliedes 3 verbundenen Ausgang ein Signal abgegeben, das zusammen mit dem von der Signalauswerteeinrichtung 2 abgegebenen Signal die Koinzidenzbedingung erfüllt, womit die Synchronisierphase aufrecht erhalten wird, d. h. auch in der nachfolgenden Periode das Auftreten des ersten Bits in einer Empfangszeitspanne zu einer Taktauswahl durch die Taktauswahlschaltung 5 und zu einer Einstellung des Synchronzählers 6 in den Anfangszustand führt.

War dagegen ein richtiges Synchronwort im Register 8 enthalten, dann führt das am erwähnten Ausgang auftretende Signal dazu, daß das Ausgangssignal der Signalauswerteschaltung 2 nicht an die nachfolgenden Einrichtungen weitergegeben werden kann. Es liegt dann eine Synchronbetriebsphase vor, in der die von der Taktauswahlschaltung vorher ausgewählte Bittaktfolge beibehalten wird und eine Nullstellung des Synchronzählers unterbleibt und zwar so lange, bis durch den Vergleicher 8a wieder eine Nichtübereinstimmung festgestellt wird.

Im Synchronbetrieb können also Störungen, die während einer Empfangszeitspanne vor und nach einem Nachrichtensignalblock auftreten, nicht in die Register 8 bis 10 gelangen und bleiben daher ohne Auswirkung.

Bei durch den Vergleicher 8a ermittelten positivem Vergleichsergebnis wird über einen zweiten Ausgang ein Freigabesignal an Koinzidenzglieder 11 und 12 geliefert, über die eine Ausgabe des Inhalts der Schieberegister 9 und 10 an weitere, hier nicht dargestellte Einrichtungen der Vermittlung erfolgen kann, die der Verarbeitung der betreffenden Digitalsignale dienen. Die Zeitpunkte einer solchen Ausgabe werden durch Übernahmesignale k und l bestimmt.

Bei dem hier beispielsweise behandelten Zeitlagengetrenntverfahren handelt es sich um ein diskontinuierliches Verfahren, bei dem, wie erwähnt, während festgelegter Zeitspannen abwechselnd gesendet und empfangen wird. Bei zeitlich kontinuierlichen Übertragungsverfahren, zu denen das Frequenzgetrenntlageverfahren, bei dem die Übertragung von Nachrichtensignalen der beiden Übertragungsrichtungen unter Verwendung zweier verschiedener Trägerfrequenzen geschieht, und das sogenannte Gleichlageverfahren gehört, bei dem ebenfalls zeitlich zwischen einem Sendebetrieb und einem Empfangsbetrieb nicht unterschieden wird, mit Hilfe einer Brückenschaltung jedoch gewährleistet ist, daß die ausgesendeten Signale nicht wieder zusammen mit den Signalen der Gegenrichtung empfangen werden, fehlen im Informationsfluß Pausen, weswegen das Synchronisierwort auch seine besondere Stellung als eindeutiger Anfang eines Informationsblocks verliert. Es muß daher mit einem aufwendigeren Synchronisierwort, das mehr als zwei Bits aufweist, sowie mit einem komplizierteren Identifizierungsverfahren gearbeitet werden, das auf die Überwachung des mehrmaligen Auftretens des Synchronisierwortes in bestimmten Abständen hinausläuft. Bei einer Empfangsschaltung mit den erfindungsgemäßen Merkmalen, die diesen Übertragungsverfahren gerecht wird, fehlt das Koinzidenzglied 1, da auch ein eine Empfangszeitspanne festlegendes Signal nicht mehr vorhanden ist. Außerdem müssen mehrere zeitlich gestaffelte Übernahmesignale k und l vorgesehen sein, da nicht mehr die Möglichkeit besteht, diese Zeitpunkte unverändert in eine Empfangspause zu legen. Die Auswahl der jeweils richtigen Übernahmesignale kann durch ein ebenfalls von der Ablaufsteuerung geliefertes Signal erfolgen.

**Patentansprüche**

1. Schaltungsanordnung zum Empfang von digitalen Nachrichtensignalen in einer digitalen Vermittlungsstelle eines PCM-Zeitmultiplexfernmeldenetzes, die in Form von wenigstens ein Nachrichtensignalwort (NW), gegebenenfalls ein Signalisierwort (Si), sowie ein diesen vorangestelltes Synchronisierwort (Sy) umfassenden Nachrichtensignalblöcken (Sy, Si, NW) von digitalen Teilnehmerstellen aus auf Teilnehmeranschlußleitungen übertragen werden, mit Registern (8, 9, 10) für die Teile eines Nachrichtensignalblockes (Sy, Si, NW), sowie mit einem Vergleicher (8a), der den Inhalt des für die Aufnahme des Synchronisierwortes (Sy) bestimmten Registers (8) auf das Auftreten eines Synchronisierwortes (Sy) überwacht und dabei im Falle einer Übereinstimmung eine Synchronbetriebsphase herbeiführt oder aufrechterhält und im Falle einer Nichtübereinstimmung eine Synchronisierphase herbeiführt oder aufrechterhält, dadurch gekennzeichnet, daß diese Schaltungsanordnung eine Signalauswerteeinrichtung (2), die auf vom Ruhezustand unterscheidbare digitale Signale anspricht und danach mindestens für die Dauer eines Nachrichtensignalblockes (Sy, Si, NW) und höchstens bis zum Beginn einer neuen Nachrichtensignalblockperiode für solche digitalen Signale unempfindlich ist, ferner eine Taktauswahlschaltung (5), die aus dem Amtstakt (e) der Vermittlungsstelle mehrere gleichfrequente aber phasenverschobene Bittaktfolgen ableitet und während einer Synchronisierphase nur die mit dem Ansprechzeitpunkt der Auswerteeinrichtung (2) gleichphasige Bittaktfolge (f) weitergibt, ferner einen Synchronzähler (6) mit der Länge der Nachrichtensignalblöcke (Sy, Si, NW) entsprechender Zählkapazität, der durch die ausgewählte Bittaktfolge (f) weitergeschaltet und während der Synchronisierphase beim Ansprechen der Signalauswerteschaltung (2) in seinen Zähleranfangsstand gestellt wird, sowie eine Ablaufsteuerung (7) aufweist, die aus den Zählerständen des Synchronzählers (6) Aufnahmefreigabesignale für die Register (8, 9, 10) ableitet, und daß in der Synchronbetriebsphase die durch die Taktauswahlschaltung (5) ausgewählte Bittaktfolge (f) unbeeinflußt beibehalten wird, eine Nullstellung des Synchronzählers (6) unterbleibt, sowie die Ausgabe aus den Registern (9, 10) für das Signalisierwort (Si) und das Nachrichtensignalwort (NW) freigegeben wird.

2. Schaltungsanordnung nach Anspruch 1, dadurch gekennzeichnet, daß sie Nachrichtensignale (b) nur während einer festgelegten Empfangszeitspanne (a) aufnimmt (Fig. 2).

3. Schaltungsanordnung nach Anspruch 2, dadurch gekennzeichnet, daß die Signalauswerteeinrichtung (2) eine bistabile Kippstufe ist, die zu Beginn jeder Empfangszeitspanne (a) gesetzt und durch das erste danach auftretende digitale Signal eines vorgegebenen Binärwerts rückgesetzt wird, und daß die Ablaufsteuerung (7) ein Decoder ist, der an den erwähnten Teilen der Nachrichtensignalblöcke (Sy, Si, NW) entsprechenden Ausgängen jeweils solange ein Ausgangssignal abgibt, wie der Synchronzähler (6) die diesen Teilen entsprechenden Zählerstände einnimmt.

## Claims

1. Circuit arrangement for the reception of digital coomunications signals in a digital exchange within a PCM t.d.m. telecommunications network which are transmitted in the form of communications signal blocks (Sy, Si, NW) which comprise at least one communications signal word (NW), possibly one signalling word (Si), and a preceding synchronising word (Sy), from digital subscriber stations on subscriber connection lines, with registers (8, 9, 10) for the components of a communications signal block (Sy, Si, NW), and with a comparator (8a) which, on the occurrence of a synchronising word (Sy), monitors the content of the register (8) specified to receive the synchronising word (Sy) and in the case of conformity instigates or maintains a synchronous operation phase, and in the event of non-conformity instigates or maintains a synchronising phase, characterised in that this circuit arrangement further comprises a signal analysis device (2) which responds to digital signals which can be distinguished from the rest state and thereafter is insensitive to such digital signals at least for the duration of one communications signal block (Sy, Si, NW) and at most until the beginning of a new communications signal block period, further comprises a clock pulse select circuit (5) which derives a plurality of bit clock pulse sequences which are equal in frequency but displaced in phase from the exchange pulse train (e) of the exchange and, during a synchronising phase, forwards only that bit clock pulse sequence (f) which is equal in phase to the response time of the analysis device (2), further comprises a synchronous counter (6) whose counting capacity corresponds to the length of the communications signal blocks (Sy, Si, NW) and which is stepped on by the selected bit clock pulse sequence (f) and is brought to its initial count during the synchronising phase on the response of the signal analysis circuit (21), and further comprises a a flow control unit (7) which derives reception enabling signals for the registers (8, 9, 10) from the counts of the synchronous counter (6), and that in the synchronous operation phase the bit clock pulse sequence (f) selected by the clock pulse selector circuit (5) is retained unaffected, a zero setting of the synchronous counter (6) is discontinued, and the output from the registers (9, 10) for the signalling word (Si) and the communications signal word (NW) is enabled.

2. Circuit arrangement as claimed in claim 1, characterised in that it receives communications signals (b) only during a predetermined reception time interval (a) (Fig. 2).

3. Circuit arrangement as claimed in claim 2, characterised in that the signal analysis device (2) is a bistable flip-flop which is set at the beginning of each reception time interval (a) and is reset by the first subsequent digital signal of a predetermined binary value, and that the flow control unit (7) is a decoder which emits an output signal at outputs corresponding to the aforementioned components of the communications signal Blocks (Sy, Si, NW) for such time as the synchronous counter (6) assumes counts corresponding to these components.

## Revendications

1. Montage pour la réception de signaux d'informations numériques dans un central numérique d'un réseau de télécommunications PCM à multiplexage par répartition dans le temps, qui sont retransmis, sous forme de blocs de signaux d'informations (Sy, Si, NW) comprenant au moins un mot de signaux d'informations (NW), éventuellement un mot de signalisation (Si), précédant ce dernier, de postes d'abonnés numériques sur les lignes d'abonnés, du type comportant des registres (8, 9, 10) pour les parties d'un bloc de signaux d'informations (Sy, Si, NW) ainsi que des comparateurs (8a) qui surveillent le contenu du registre (8) destiné à recevoir le mot de synchronisation (Sy) du point de vue de l'apparition de ce mot de synchronisation et qui provoquent ou maintiennent une phase de fonctionnement synchrone dans le cas d'une coïncidence et qui, dans le cas d'un manque de coïncidence, provoquent ou maintiennent une phase de synchronisation, caractérisé par le fait que ledit montage comporte un dispositif d'évaluation des signaux (2) qui est sensible à des signaux numériques distincts de l'état de repos et qui est ensuite insensible à de tels signaux au moins pour la durée d'un bloc de signaux d'informations (Sy, Si, NW) et au plus jusqu'au début d'une nouvelle période de blocs de signaux d'information, en outre, un circuit de sélection de cadence (5) qui déduit de la cadence du central plusieurs séries de cadences de bits de même fréquence mais déphasées et qui transmet pendant une phase de synchronisation uniquement la série de cadences de bits qui sont en phase avec l'instant de réponse du circuit d'évaluation (2), ainsi qu'un compteur synchrone (6) à capacité de comptage qui correspond à la longueur des blocs de signaux d'informations (Sy, Si, NW), qui est avancé par les séries de cadences de bits sélectionnées (f) et qui est ramené à son état de comptage initial pendant la phase de synchronisation, lors de la réponse du circuit d'évaluation des signaux (2) ainsi qu'une commande de déroulement (7) qui dérive des états de comptage du compteur synchrone (6) des signaux de libération de réception pour les registres (8, 9, 10), et que dans la phase de fonctionnement synchrone la série de cadences de bits sélectionnée par le circuit de sélection de cadence (5) est conservée, sans être influencée, qu'une remise à la position zéro du compteur ne peut avoir lieu et que le mot de signalisation (Si) peut être extrait du registre alors que le mot de signaux d'informations (NW) est libéré.

2. Montage selon la revendication 1, caractérisé par le fait qu'il n'accepte les signaux d'informations (b) que pendant un intervalle de temps de réception (a) déterminé.

3. Montage selon la revendication 2, caractérisé par le fait que le dispositif d'évaluation des signaux (2) est constitué par un étage à bascule bistable qui, au début de chaque intervalle de temps de réception (a) est activé et est remis à l'état initial par le premier signal numérique d'une valeur binaire prédéterminée, qui apparaît ensuite, et que la commande de déroulement (7) est constituée par un décodeur qui fournit aux entrées qui correspondent aux éléments mentionnés des plaques de signaux d'informations (Sy, Si, NW), tant que le compteur synchrone (6) assume les états de comptage qui correspondent à ces éléments.

# FIG 1

# FIG 2

|23|24|25|26|27|28|29|30|31|32|33|34|35|36|37|38|39|40|41|42|43|44|45|46|47|48|49|50|51|52|53|54|55|56|57| )) |62|63|0  1

a

b   Sy   Si        NW

↓ c

↓ c

|0|1 |2|3 |4|5 |6|7 |8 |9|10|11|12|13|14|15|16|17|18|19|20|21|22|23|24|25|26|27|28|29| )) |  |  |  |  |

h

i

j

t